# EUROPÄISCHE PATENTSCHRIFT

(11) **EP 1 995 114 B1**
(45) Veröffentlichungstag und Bekanntmachung des Hinweises auf die Patenterteilung: **30.09.2009**
(21) Anmeldenummer: 07010425.2
(22) Anmeldetag: 25.05.2007
(51) Int. Cl.: B60Q 1/02

(54) **Leuchte in einem Kraftfahrzeug**
Lamp in a motor vehicle
Eclairage dans un véhicule automobile

(43) Veröffentlichungstag der Anmeldung: 26.11.2008
(73) Patentinhaber: Delphi Technologies, Inc., Troy, Michigan 48007 (US)
(72) Erfinder: Luft, Thomas, 55545 Bad Kreuznach (DE)
(74) Vertreter: Denton, Michael John

(56) Entgegenhaltungen:
- EP-A- 1 574 408
- EP-A1- 1 273 494
- EP-A2- 1 097 842
- WO-A-20/04039631
- DE-A1- 3 732 936
- DE-A1- 4 417 710

## Beschreibung

Die Erfindung bezieht sich auf eine Leuchte für Kraftfahrzeuge mit einer in einem Gehäuse angeordneten LED und einem in dem Gehäuse zusätzlich angeordneten Sensor.

Eine gattungsgemäße Leuchte ist aus der EP 1 273 494 A1, WO 2004/039 631 A1, EP 1 097 842 A2 und der DE 44 17 710 A1 bekannt.

Durch die zunehmende Leistungsfähigkeit von Licht emittierenden Dioden (LED) werden diese in der Kraftfahrzeugtechnik immer häufiger eingesetzt. So werden beispielsweise Brems- und Rücklichter von Kraftfahrzeugen, die bisher durch eine Halogenlampe realisiert wurden, durch eine Vielzahl an Leuchtdioden ersetzt.

Ebenso ist es bekannt, Leuchtdioden in Fahrzeuginnenraumleuchten einzusetzen, da sie sich durch einen geringen Energieverbrauch und eine hohe Langlebigkeit auszeichnen. Hierzu sind eine oder mehrere Leuchtdioden in einem Gehäuse angebracht, wobei das Gehäuse wiederum beispielsweise an einem seitlichen oder mittleren Bereich eines Dachhimmels im Innenraum des Kraftfahrzeugs angeordnet sein kann. Selbstverständlich kann das Gehäuse mit einer Streuscheibe zur besseren Lichtverteilung des von der LED ausgehenden Lichts versehen sein. Gegebenenfalls kann das Gehäuse bzw. ein Teil davon auch abgewinkelt ausgebildet sein, um unter anderem als persönliche Leseleuchte eingesetzt zu werden. Eine solche LED kann auf einem winkelförmig ausgebildeten Stanzgitter, Kunststoffteil oder Teil einer Leiterplatte ausgebildet sein. Das Stanzgitter oder Kunststoffteil selbst kann wiederum als SMD-Bauteil zur Bestückung einer Leiterplatte ausgebildet sein.

Weiterhin ist es bekannt, verschiedene Sensoren im Innenraum des Kraftfahrzeugs vorzusehen, beispielsweise einen Ultraschallsensor eines Ultraschall-Innenraumschutz-Systems (USIS). Ebenso können Infrarotsensoren vorhanden sein, um z. B. eine Sitzbelegung zu detektieren.

Bei den bisherigen Leuchten mit herkömmlichen Leuchtmitteln ist ein relativ großformatiges Gehäuse notwendig, damit für das Leuchtmittel ausreichend Einbauraum sowie Platz für die Wärmeabführung zur Verfügung steht. Somit können oftmals die ästhetischen Anforderungen an ein solches Gehäuse, das auchmodulartig, gegebenenfalls mit weiteren Bauelementen, zusammen gefasst sein kann, nicht erfüllt werden.

Es ist Aufgabe der Erfindung, eine Leuchte für Kraftfahrzeuge der eingangs genannten Art zu schaffen, mit der bei gleichem Einbauraum mehrere Funktionalitäten erfüllbar sind.

Erfindungsgemäß wird die Aufgabe dadurch gelöst, dass das Gehäuse zumindest abschnittsweise als paraboloider, mit einer reflektierenden Beschichtung versehener Reflektor für die LED und zumindest abschnittsweise als mit einer Oberflächenbeschichtung zur Reflektion der Ultraschall- und/oder Infrarotsignale versehene Führung für die Sensorsignale ausgebildet ist.

Bei einer derart ausgebildeten Leuchte ist also neben einer LED als Leuchtmittel in dem Gehäuse des Weiteren ein Sensor vorhanden. Ist das Gehäuse beispielsweise in der Größe eines herkömmlichen Gehäuses für ein Leuchtmittel, wie eine Halogenlampe oder dergl., ausgebildet, so wird durch die Verwendung einer LED erheblich Einbauraum eingespart, der für weitere Bauelemente, insbesondere dem Sensor, zur Verfügung steht. Somit kann der Sensor in ein Gehäuse bekannter Größe, das entsprechend der LED als Leuchtmittel umgebildet ist, integriert werden, wodurch kein zusätzlicher Platzbedarf für den Sensor entsteht.

Der Vorteil der Erfindung besteht darin, dass mehrere Funktionalitäten, nämlich die einer Leseleuchte und die eines an sich beliebigen Sensors, in einem einzigen Gehäuse integriert werden können, was bei der Herstellung des Kraftfahrzeugs weniger Aufwand erfordert. Selbstverständlich können der Sensor und die LED über einen gemeinsamen Kabelbaum im zusammengebauten Kraftfahrzeug versorgt werden.

Der Reflektor für die LED ist entsprechend ausgeformt, nämlich paraboloid und mit der reflektierenden Beschichtung, beispielsweise einer Metallisierung, versehen. Prinzipiell können verschiedene Abschnitte des Gehäuses unterschiedlich ausgeformt und beschichtet sein, um einerseits Licht und andererseits Sensorsignale zu führen.

Bevorzugt ist der Sensor ein Transmitter/Receiver eines Ultraschallsensors. Der Transmitter/Receiver sendet Ultraschallsignale aus und empfängt die reflektierten Signale, wobei in einem Steuergerät aus den empfangenen Signalen entsprechende Rückschlüsse gezogen werden können. Insbesondere ist der Sensor Bestandteil eines USIS-Systems, um einen Einbruch in ein bzw. Diebstahl aus einem Kraftfahrzeug festzustellen und ein entsprechendes Alarmsignal auszugeben. Beispielsweise in einem Cabriolet und/oder einem Coupé ist die Hauptstrahlrichtung einer Leseleuchte und eines Ultraschallsignals im Wesentlichen die Gleiche. Die Leseleuchte ist ungefähr auf einen Oberschenkelbereich eines Sitzes ausgerichtet und das Ultraschallsignal wird auf einen mittigen Bereich des unbesetzten Fahrersitzes ausgerichtet. Somit können LED und Sensor in einem gemeinsamen Gehäuse bzw. Reflektor angeordnet sein, um unabhängig voneinander Licht bzw. Ultraschallsignale abzugeben.

Des Weiteren ist es möglich, alternativ oder zusätzlich einen Infrarotsensor im Gehäuse anzubringen, um das Vorhandensein einer Person auf einem Sitz bzw. deren Größe und/ oder Gewicht festzustellen, um beispielsweise die Rückhaltekräfte eines Sicherheitsgurts entsprechend einzustellen oder die Art und Weise der Entfaltung eines Airbags zu kontrollieren.

Nach einer Weiterbildung ist der LED ein Lichtleiter zugeordnet, um das von der LED ausgehende Licht in gewünschter Weise beispielsweise durch eine Streuscheibe nach außen hin zu führen.

Selbstverständlich können der Sensor und die LED jeweils unterschiedliche Strahlrichtungen aufweisen. Dies ist insbesondere dann der Fall, wenn die LED bzw. ein Teil des ihr zugeordneten Reflektors bewegbar ist, um von einem Nutzer in gewünschter Weise ausgerichtet werden zu können.

Bevorzugt ist die Leuchte mit ihrem Gehäuse und dem zusätzlichen Sensor Bestandteil eines Dachmoduls, das in einem Dachbereich eines Kraftfahrzeugs eingebaut ist. Besonders bei Cabriolets und Coupés ist es notwendig, derartige Dachmodule, in denen unter anderem Leseleuchten und sonstige Betätigungselemente vorgesehen sein können, möglichst kompakt aufzubauen. Hierzu ist der Sensor in das Gehäuse der Leuchte integriert, so dass gesonderter Einbauraum eingespart wird.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen mit Bezugnahme auf die Zeichnungen näher erläutert. Es zeigt:

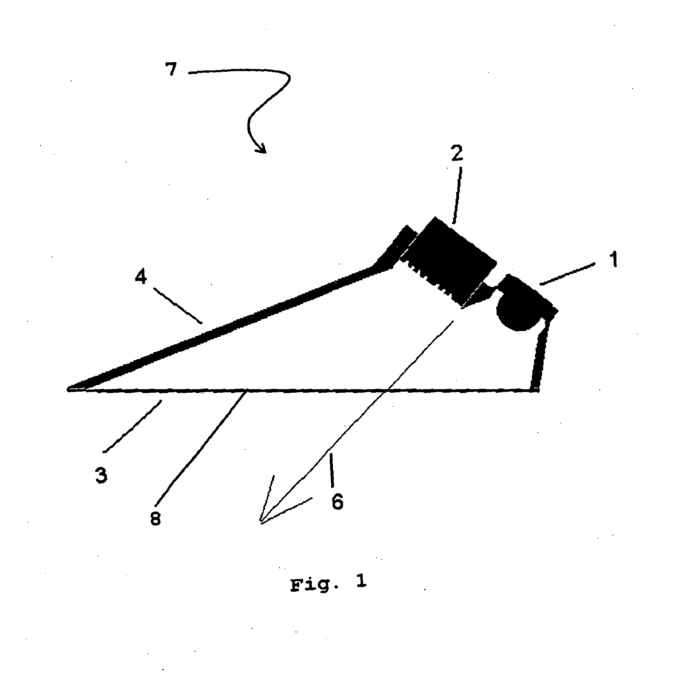

- Fig.1: eine erfindungsgemäße Leuchte im Querschnitt,
- Fig.2: eine alternative Ausgestaltung der Leuchte nach Fig. 1 und
- Fig.3: eine perspektivische Ansicht der Leuchte nach Fig. 1.

Die Leuchte 7 umfasst ein Gehäuse 4, beispielsweise ein Kunststoff-Spritzgussteil, und als Leuchtmittel eine oder mehrere LEDs 1. Das von der LED 1 erzeugte Licht tritt im Wesentlichen in einer Hauptstrahlrichtung 6 aus dem Gehäuse 4 durch eine in eine Austrittsöffnung 3 eingesetzte Streuscheibe 8 hindurch aus. Zusätzlich ist in dem Gehäuse 4 seitlich neben der LED 1 ein Sensor 2, beispielsweise ein Ultraschall- oder ein Infrarotsensor, angeordnet, wobei aufgrund der kleinen Einbaumaße der LED 1 das Gehäuse 4 gegenüber dem Gehäuse eines herkömmlichen Leuchtmittels, wie einer Halogenlampe, nicht vergrößert werden muss. Die Signale des Sensors 2 treten ebenfalls im Wesentlichen entlang der Hauptstrahlrichtung 6 aus der Streuscheibe 8 aus, die natürlich für diese Signale durchlässig ausgebildet ist.

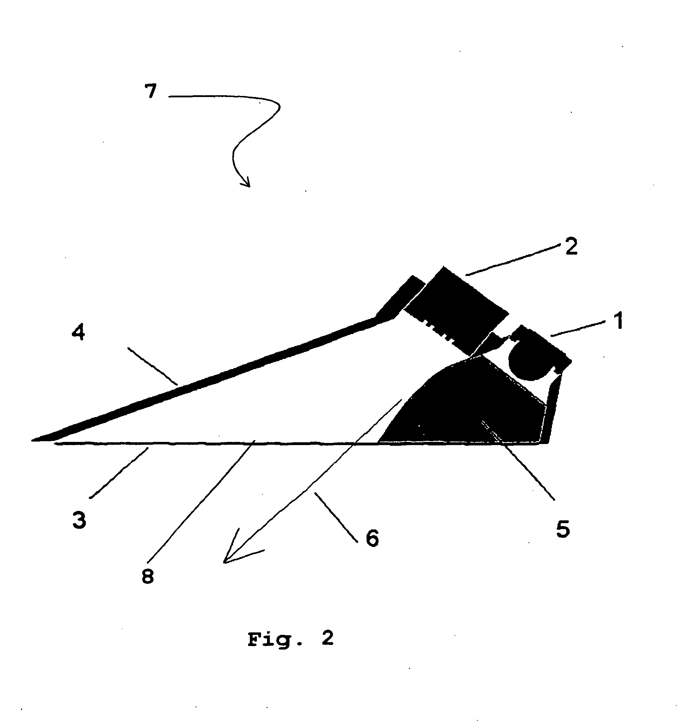

Bei der alternativen Ausführung der Leuchte 7 nach Fig. 2 ist der LED 1 ein zusätzlicher Lichtleiter 5, beispielsweise aus einem hierfür geeigneten Kunststoffmaterial, zugeordnet, um das austretende Licht in gewünschter Weise auszurichten.

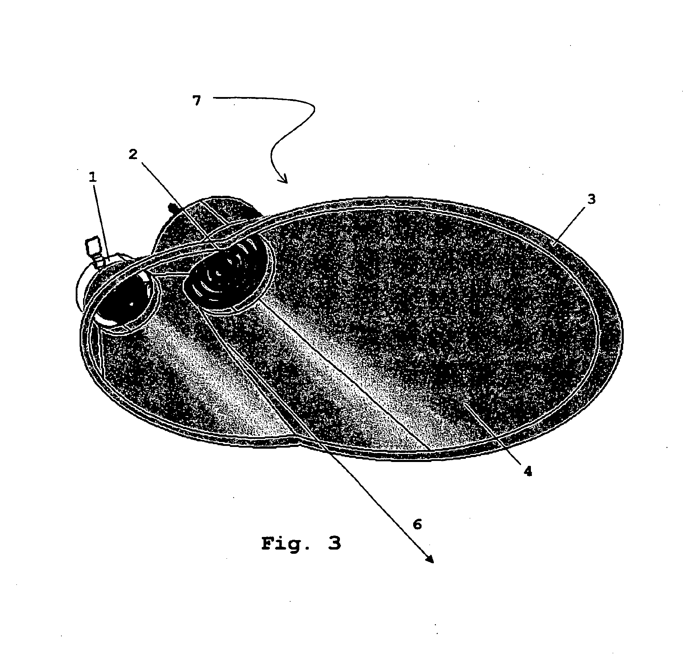

Bei der Darstellung der Leuchte 1 nach Fig. 3 ist ein Teil des Gehäuses 4 als Reflektor für das Licht der LED 1 ausgebildet und beispielsweise paraboloid ausgeformt sowie reflektierend beschichtet. Ein anderer Teil des Gehäuses 4 ist zur Führung und Ausrichtung der Signale des Sensors 2, ausgebildet. Die Hauptstrahlrichtungen der LED 1 sowie des Sensors 2 können auch von der Hauptstrahlrichtung 6 abweichen.

Vorzugsweise ist die Leuchte 7 Bestandteil eines Dachmoduls für einen Innenraum eines Kraftfahrzeugs, wodurch in dem Dachmodul bei gleichen Einbaumaßen mehrere Funktionalitäten, wie Beleuchtungsmittel und Sensor, integriert sind.

## Patentansprüche

1. Leuchte für Kraftfahrzeuge mit einer in einem Gehäuse (4) angeordneten LED (1) und einem in dem Gehäuse (4) zusätzlich angeordneten Sensor (2), **dadurch gekennzeichnet, dass** das Gehäuse (4) zumindest abschnittsweise als paraboloider, mit einer reflektierenden Beschichtung versehener Reflektor für die LED (1) und zumindest abschnittsweise als mit einer Oberflächenbeschichtung zur Reflektion der Ultraschall- und/oder Infrarotsignale versehene Führung für die Sensorsignale ausgebildet ist.

2. Leuchte nach Anspruch 1, **dadurch gekennzeichnet, dass** der Sensor (2) ein Transmitter/Receiver eines Ultraschallsensors ist, insbesondere eines USIS-Systems.

3. Leuchte nach Anspruch 1, **dadurch gekennzeichnet, dass** der Sensor (2) ein Infrarotsensor ist.

4. Leuchte nach einem der Ansprüche 1 bis 3, **dadurch gekennzeichnet, dass** der LED (1) ein Lichtleiter (5) zugeordnet ist.

5. Leuchte nach einem der Ansprüche 1 bis 4, **dadurch gekennzeichnet, dass** die LED (1) und der Sensor (2) abweichende Strahlrichtungen aufweisen.

6. Dachmodul in einem Kraftfahrzeug, insbesondere Cabriolet oder Coupé, **dadurch gekennzeichnet, dass** es eine Leuchte (7) nach einem der Ansprüche 1 bis 5 umfasst.

## Claims

1. Lamp for motor vehicles with a LED (1) arranged in a housing (4) and a sensor (2) additionally arranged in the housing (4), **characterized in that** the housing (4) is configured at least partially as a paraboloidal reflector having a reflecting coating for the LED (1) and at least partially as a channel having a surface coating for reflexion of ultrasonic and/or infrared signals for the sensor signals.

2. Lamp according to claim 1, **characterized in that** the sensor (2) is a transmitter/receiver of an ultrasonic sensor, in particular of an USIS system.

3. Lamp according to claim 1, **characterized in that** the sensor (2) is an infrared sensor.

4. Lamp according to one of the claims 1 to 3, **characterized in that** a light guide (5) is associated with the LED (1).

5. Lamp according to one of the claims 1 to 4, **characterized in that** the LED (1) and the sensor (2) comprise different beam directions.

6. Roof module in a motor vehicle, in particular convertible or coupe, **characterized in that** it includes a lamp (7) according to one of the claims 1 to 5.

## Revendications

1. Luminaire pour véhicules automobiles, comprenant une diode électroluminescente (1) agencée dans un boîtier (4) et un capteur (2) agencé additionnellement dans le boîtier (4), **caractérisé en ce que** le boîtier (4) est réalisé au moins par tronçons sous la forme d'un réflecteur parabolique, pourvu d'un revêtement réfléchissant, pour la diode électroluminescente (1), et au moins par tronçons sous la forme d'un guide pour les signaux du capteur, doté d'un revêtement de surface pour la réflexion des signaux ultrasonores et/ou infrarouges.

2. Luminaire selon la revendication 1, **caractérisé en ce que** le capteur (2) est un émetteur/récepteur d'un capteur à ultrasons, en particulier d'un système USIS.

3. Luminaire selon la revendication 1, **caractérisé en ce que** le capteur (2) est un capteur à infrarouges.

4. Luminaire selon l'une des revendications 1 à 3, **caractérisé en ce qu'**un guide d'ondes (5) est associé à la diode électroluminescente (1).

5. Luminaire selon l'une des revendications 1 à 4, **caractérisé en ce que** la diode électroluminescente (1) et le capteur (2) présentent des directions de rayonnement différentes.

6. Module de toiture dans un véhicule automobile, en particulier cabriolet ou coupé, **caractérisé en ce qu'**il comprend un luminaire (7) selon l'une des revendications 1 à 5.
